# FASCICULE DE BREVET EUROPEEN

(11) **EP 1 564 397 B1**
(45) Date de publication et mention de la délivrance du brevet: **13.09.2006**
(21) Numéro de dépôt: 05290295.4
(22) Date de dépôt: 10.02.2005
(51) Int. Cl.: F02K 3/065, F02K 3/072, F02C 7/06

(54) **Architecture d'un turboréacteur ayant une double soufflante à l'avant**
Strahltriebwerks-Architektur mit zwei Fans an der Vorderseite
Jet engine architecture having two fans at the front end

(30) Priorité: 11.02.2004 FR 0401336
(43) Date de publication de la demande: 17.08.2005
(73) Titulaire: SNECMA, 75015 Paris (FR)
(72) Inventeur: Bart, Jacques, 91370 Verrieres-Le-Buisson (FR); Beutin, Bruno, 91000 Evry (FR); Lebret, Yann, 77950 Maincy (FR)
(74) Mandataire: Barbin le Bourhis, Joël

(56) Documents cités:
- EP-A- 0 623 736
- EP-A- 1 340 903
- GB-A- 2 189 844
- US-A- 3 486 328
- US-A- 3 713 748

## Description

L'invention concerne un turboréacteur triple corps, double flux, à grand taux de dilution, qui comporte, à l'avant d'un carter intermédiaire présentant une grille structurale externe dans la veine du flux secondaire et une grille structurale interne dans la veine du flux primaire, une soufflante avant et une soufflante arrière dont les pales s'étendent radialement vers l'extérieur jusqu'à un carter de soufflante, qui délimite extérieurement la veine du flux secondaire, ainsi qu'un compresseur basse pression destiné à comprimer l'air entrant dans le canal du flux primaire, lesdites soufflantes avant et arrière étant entraînées en rotation directement et séparément par deux arbres coaxiaux.

Dans les turboréacteurs modernes à grand taux de dilution et de forte puissance, la soufflante à un grand diamètre, et la vitesse périphérique en tête de pale est proportionnelle à ce diamètre et à la vitesse de rotation de la soufflante. Or pour obtenir un bon rendement, cette vitesse périphérique doit être inférieure à la vitesse du son. Ceci peut être obtenu dans un turboréacteur classique ayant une seule soufflante, en intercalant un réducteur entre l'arbre d'entraînement et la soufflante. Mais un réducteur entraîne une augmentation appréciable de la masse du moteur et une perte de rendement. Une autre solution consiste à équiper le turboréacteur de deux soufflantes, une soufflante avant et une soufflante arrière, montées à l'avant du carter intermédiaire, qui sont entraînées chacune par un arbre d'entraînement à basse vitesse sans interposition d'un réducteur. Chaque soufflante fournit à l'air circulant dans le canal du flux secondaire, sensiblement la moitié de l'énergie de propulsion du flux secondaire.

Dans les turboréacteurs ayant deux soufflantes à l'avant du carter intermédiaire, supportées par ce carter intermédiaire, le porte à faux de la soufflante avant est important, d'autant plus que la distance entre les pales des deux soufflantes doit être suffisamment grande pour éviter les nuisances sonores.

L'état de la technique est illustré notamment par US 3 861 139 et US 4 860 537 qui dévoilent des turboréacteurs du type mentionné en introduction, ayant des doubles soufflantes contrarotatives associées à un compresseur basse pression également contrarotatif à double rotor, le rotor interne étant entraîné par l'arbre d'entraînement de la soufflante avant et le rotor externe par l'arbre d'entraînement de la soufflante arrière.

Le but de l'invention est de proposer un turboréacteur à double soufflante dans lequel les inconvénients du porte à faux sont éliminés.

Le but est atteint selon l'invention par le fait que les pales de la soufflante arrière s'étendent dans la veine du flux secondaire à partir d'une roue reliée à son arbre d'entraînement par l'intermédiaire d'une couronne aval d'aubes mobiles du compresseur basse pression, ce dernier comportant, en outre, au moins une couronne amont d'aubes mobiles entraînée par l'arbre d'entraînement de la soufflante avant et un stator extérieur dans l'alésage duquel s'étendent des grilles d'aubes fixes intercalées entre les couronnes d'aubes mobiles, ledit stator extérieur étant porté par le carter de soufflante par l'intermédiaire d'un deuxième carter intermédiaire comprenant une deuxième grille structurale externe dans la veine du flux secondaire entre les pales de la soufflante avant et les pales de la soufflante arrière, et une deuxième grille structurale interne dans la veine du flux primaire, et par le fait que le premier carter intermédiaire supporte l'arbre de rotation de la soufflante arrière par l'intermédiaire d'un palier de butée axiale, et l'arbre d'entraînement de la soufflante avant par l'intermédiaire d'un palier inter-arbres, et des paliers supplémentaires sont également interposés entre ledit deuxième carter intermédiaire et lesdits arbres.

Selon un premier mode de réalisation de l'invention, le palier de butée de l'arbre d'entraînement de la soufflante avant est supporté par le deuxième carter intermédiaire et le palier inter-arbres est un palier à rouleaux.

Selon un deuxième mode de réalisation de l'invention le palier inter-arbres est un palier de butée et le palier interposé entre le deuxième carter intermédiaire et l'arbre d'entraînement de la soufflante avant est un palier à rouleaux.

Le palier interposé entre le deuxième carter intermédiaire et l'arbre d'entraînement de la soufflante arrière est un palier à rouleaux.

Le premier carter intermédiaire supporte également l'arbre d'entraînement du compresseur haute pression par l'intermédiaire d'un palier de butée.

De manière très avantageuse la soufflante avant et la soufflante arrière sont contrarotatives.

D'autres avantages et caractéristiques de l'invention ressortiront à la lecture de la description suivante faite à titre d'exemple et en référence au dessin annexé dans lequel :
La figure 1 est une demi-coupe schématique de l'avant d'un turboréacteur selon un premier mode de réalisation de l'invention ; et
La figure 2 est une demi-coupe schématique de l'avant d'un turboréacteur selon un deuxième mode de réalisation de l'invention

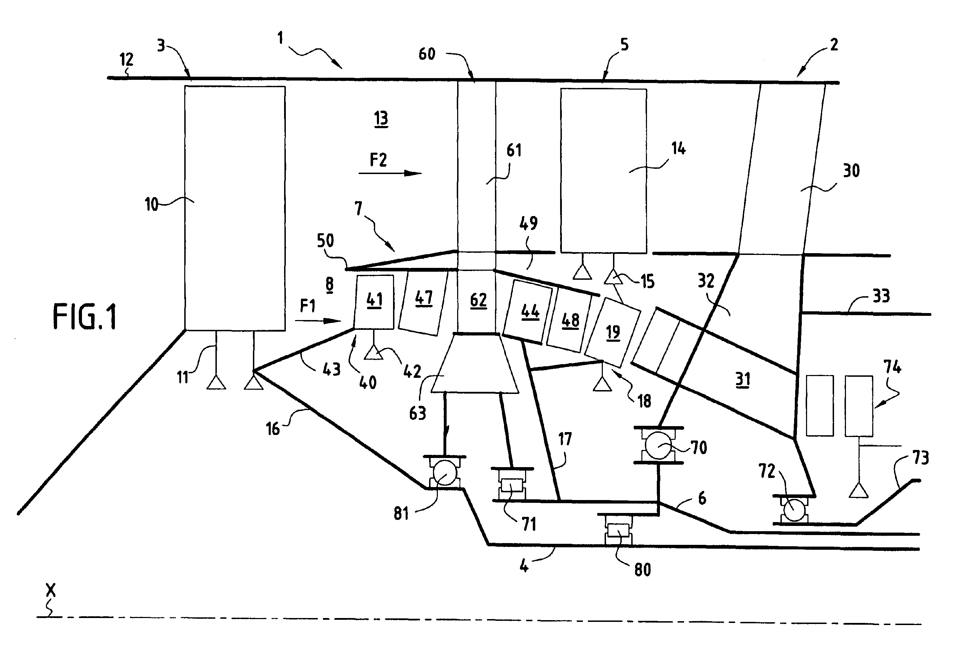

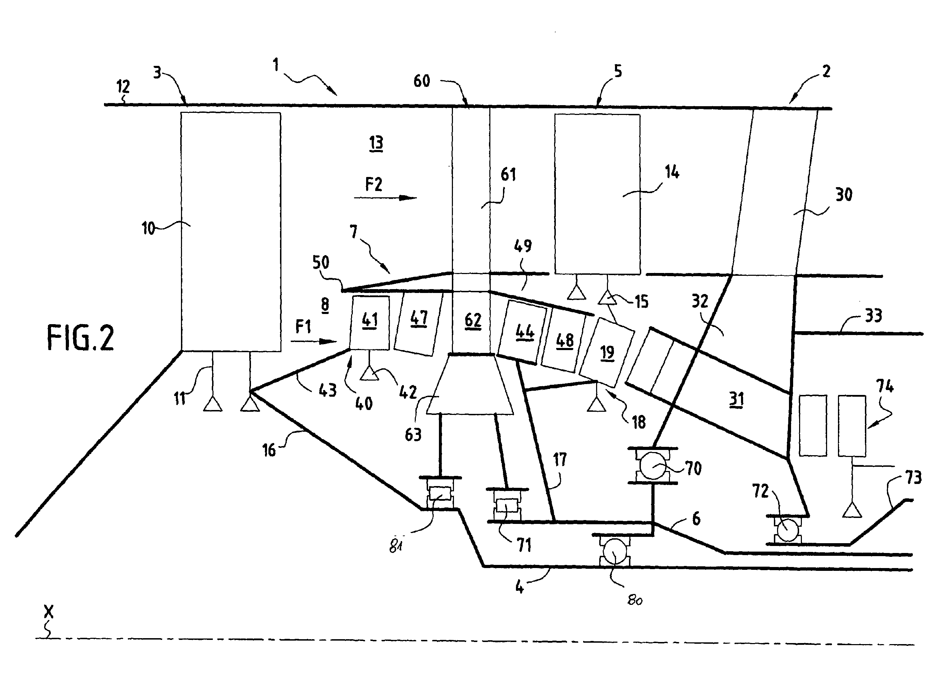

Les figures 1 et 2 montrent schématiquement l'avant 1 d'un turboréacteur d'axe X, qui comporte à l'avant d'un carter intermédiaire 2, une soufflante avant 3 entraînée par un arbre d'entraînement intérieur 4, une soufflante arrière 5 entraînée par un arbre d'entraînement intermédiaire 6 coaxial à l'arbre intérieur 4 et entourant ce dernier, et un compresseur basse pression 7 destiné à comprimer l'air pénétrant dans le canal 8 du flux primaire (F1) et disposé axialement entre la soufflante avant 3 et la soufflante arrière 5.

La soufflante avant 3 comporte des pales 10 qui s'étendent à la périphérie d'une roue 11 jusqu'à un carter de soufflante 12 qui délimite extérieurement le canal 13 du flux secondaire F2.

La soufflante arrière 5 comporte également des pales 14 qui s'étendent à la périphérie d'une roue 15 jusqu'au carter de soufflante 12, à travers le canal 13 du flux secondaire F2. La roue 15 est disposée radialement à l'extérieur du compresseur basse pression 7.

La roue 11 de la soufflante avant 3 est reliée par un cône 16 à l'arbre intérieur 4, tandis que la roue 15 de la soufflante arrière 5 est reliée à l'arbre intermédiaire 6 par un cône 17 via une couronne aval 18 d'aubes mobiles 19 du compresseur basse pression 7.

Le carter intermédiaire 2 présente une grille structurale externe 30 dans la veine du flux secondaire F2 et une grille structurale interne 31 dans la veine du flux primaire (F1). La grille structurale externe 30 est reliée extérieurement au carter de soufflante 12. Un caisson annulaire 32 est interposé entre la grille structurale externe 30 et la grille structurale interne 31. La référence 33 désigne les barres de reprise de poussée reliant le carter intermédiaire 2 au mât de support du turboréacteur, non montré sur les dessins.

Le compresseur à basse pression 7 comporte, en plus de la couronne aval 18 d'aubes mobiles 19, une couronne amont 40 d'aubes mobiles 41 qui s'étendent à la périphérie d'une roue 42 reliée au cône 16 ou à la roue 11 par une virole 43, et une couronne intermédiaire d'aubes mobiles 44 entraînée en rotation par l'arbre intermédiaire 6. Entre les couronnes d'aubes mobiles du compresseur sont intercalées des grilles d'aubes fixes 47 et 48 qui s'étendent radialement à l'intérieur de l'alésage d'un stator extérieur 49 qui présente à l'avant un bec séparateur 50 du flux primaire F1 et du flux secondaire F2.

Le stator extérieur 49 du compresseur basse pression 7 est supporté par le carter de soufflante 12 par l'intermédiaire d'un deuxième carter auxiliaire 60, qui présente une deuxième grille structurale externe 61 dans la veine du flux secondaire F2, entre les pales 10 de la soufflante avant 3 et les pales 14 de la soufflante arrière 5, et une deuxième grille structurale interne 62 disposée dans la veine du flux primaire F1, et qui entoure un caisson annulaire 63. La deuxième grille structurale interne 62 est disposée axialement entre la grille amont d'aubes fixes 47 et la couronne intermédiaire d'aubes mobiles 44.

Le carter intermédiaire aval 2 et le deuxième carter intermédiaire 60 supportent les efforts axiaux et radiaux des deux arbres 4 et 6. L'arbre intermédiaire 6 est supporté par le carter intermédiaire aval 2 au moyen d'un palier de butée 70 et par le deuxième carter intermédiaire 60 au moyen d'un palier de roulement 71. La référence 72 désigne un palier de butée permettant au carter intermédiaire 2 de supporter l'arbre d'entraînement 73 du compresseur haute pression 74 situé à l'arrière du carter intermédiaire aval 2. Un palier inter-arbres 80 est interposé entre l'arbre intérieur 4 et l'arbre intermédiaire 6, sensiblement au droit du palier de butée 70 de l'arbre intermédiaire 6, et un palier de butée 81 est interposé entre l'arbre intérieur 4 et le caisson 63 du deuxième carter intermédiaire 60 en aval du palier de roulement 71.

Selon un premier mode de réalisation, montré sur la figure 1, le palier inter-arbres 80, est un palier de roulement et le palier 81 est un palier de butée. Dans cette version les efforts axiaux de la soufflante avant 3, supportés par le deuxième carter intermédiaire 60, transitent par le carter de soufflante 12 avant d'être repris par les barres de reprise de poussée 33 au niveau du carter intermédiaire 2. Cette solution est simple d'un point de vue mécanique mais compliquée pour la transition des efforts.

Selon un deuxième mode de réalisation, montré sur la figure 2, le palier inter-arbres 80, est un palier de butée et le palier 81 est un palier de roulement. Dans cette version les efforts axiaux de la soufflante avant 3 sont, supportés par l'arbre intermédiaire 6 , ce qui fait transiter les efforts directement vers le carter intermédiaire aval 2 avant d'être repris par les barres de reprise de poussée 33 au niveau de ce carter intermédiaire 2. Cette solution est simple pour la transition des efforts mais compliquée pour la liaison entre le palier de butée 80 de la soufflante avant 3 et l'arbre d'entraînement 6 de la soufflante arrière 5.

Les deux soufflantes 3 et 5 peuvent tourner dans le même sens. Mais très avantageusement les deux soufflantes 3 et 5 sont contrarotatives et entraînées par une turbine de travail ayant deux rotors, l'un intérieur et l'autre extérieur, dont les couronnes d'aubes mobiles alternent axialement. Cette disposition permet de diminuer la longueur de la turbine de travail et sa masse du fait de l'absence d'un stator.

## Revendications

1. Turboréacteur triple corps, double flux, à grand taux de dilution, comportant à l'avant d'un premier carter intermédiaire (2) présentant une grille structurale externe (30) dans la veine du flux secondaire (F2) et une grille structurale interne (31) dans la veine du flux primaire (F1), une soufflante avant (3) et une soufflante arrière (5), dont les pales (10, 14) s'étendent radialement vers l'extérieur jusqu'à un carter de soufflante (12), qui délimite extérieurement la veine du flux secondaire (F2), ainsi qu'un compresseur basse pression (7) destiné à comprimer l'air entrant dans le canal (8) du flux primaire (F1), lesdites soufflantes avant (3) et arrière (5) étant entraînées en rotation directement et séparément par deux arbres coaxiaux (4, 6),
**caractérisé par le fait que** les pales (14) de la soufflante arrière (5) s'étendent dans la veine du flux secondaire (F2) à partir d'une roue (15) reliée à son arbre d'entraînement (6) par l'intermédiaire d'une couronne aval (18) d'aubes mobiles (19) du compresseur basse pression (7), ce dernier comportant, en outre, au moins une couronne amont d'aubes mobiles (41) entraînée par l'arbre d'entraînement (4) de la soufflante avant (3) et un stator extérieur (49) dans l'alésage duquel s'étendent des grilles d'aubes fixes (47, 48) intercalées entre les couronnes d'aubes mobiles (41, 44, 19), ledit stator extérieur étant porté par le carter de soufflante (12) par l'intermédiaire d'un deuxième carter intermédiaire (60) comprenant une deuxième grille structurale externe (61) dans la veine du flux secondaire (F2) entre les pales (10) de la soufflante avant (3) et les pales (14) de la soufflante arrière (5), et une deuxième grille structurale interne (62) dans la veine du flux primaire (F1), et **par le fait que** le premier carter intermédiaire (2) supporte l'arbre de rotation (6) de la soufflante arrière (5) par l'intermédiaire d'un palier de butée axiale (70), et l'arbre d'entraînement (4) de la soufflante avant par l'intermédiaire d'un palier inter-arbres (80), et des paliers supplémentaires (71, 81) sont également interposés entre ledit deuxième carter intermédiaire (60) et lesdits arbres (4, 6).

2. Turboréacteur selon la revendication 1, **caractérisé par le fait que** le palier de butée (81) de l'arbre d'entraînement (4) de la soufflante avant (3) est supporté par le deuxième carter intermédiaire (60) et le palier inter-arbres (80) est un palier à rouleaux.

3. Turboréacteur selon la revendication 1, **caractérisé par le fait que** le palier inter-arbres (80) est un palier de butée et le palier (81) interposé entre le deuxième carter intermédiaire (60) et l'arbre d'entraînement (4) de la soufflante avant (3) est un palier à rouleaux.

4. Turboréacteur selon l'une des revendications 2 ou 3, **caractérisé par le fait que** le palier (71) interposé entre le deuxième carter intermédiaire (60) et l'arbre d'entraînement (6) de la soufflante arrière (5) est un palier à rouleaux.

5. Turboréacteur selon l'une des revendications 1 à 4, **caractérisé par le fait que** le premier carter intermédiaire (2) supporte également l'arbre d'entraînement (73) du compresseur haute pression (74) par l'intermédiaire d'un palier de butée (72).

6. Turboréacteur selon l'une quelconque des revendications 1 à 5, **caractérisé par le fait que** la soufflante avant (3) et la soufflante arrière (5) sont contrarotatives.

## Claims

1. A three-spool by-pass turbojet with a high by-pass ratio, the turbojet having a front fan (3) and a rear fan (5) at the front of an intermediate casing (2) that presents an outer structural grid (30) in the by-pass air flow (F2) and an inner structural grid (31) in the main air flow (F1), the fans having blades (10, 14) that extend radially outwards to a fan casing (12), which fan casing outwardly defines the by-pass air flow (F2), the turbojet also having a low-pressure compressor (7) for compressing air coming into the channel (8) for the main air flow (F1), said front fan and said rear fan being rotated directly, and separately, by two shafts (4, 6) that are coaxial,
said turbojet being **characterized by** the fact that the blades (14) of the rear fan (5) extend into the by-pass air flow (F2) from a wheel (15) that is connected to its drive shaft (6) via a downstream ring (18) of rotor blades (19) in the low-pressure compressor (7), said low-pressure compressor also comprising at least one upstream ring of rotor blades (41) that is driven by the drive shaft (4) for the front fan (3), and an outer stator (49) in the bore from which grids (47, 48) of stator blades extend, said grids being interleaved between the rings (41, 44, 19) of rotor blades, said outer stator being carried by the fan casing (12) via a second intermediate casing (60) having a second outer structural grid (61) in the by-pass air flow (F2) between the blades (10) of the front fan (3) and the blades (14) of the rear fan (5), and a second inner structural grid (62) in the main air flow (F1), and by the fact that the first intermediate casing (2) supports the rotary shaft (6) of the rear fan (5) via an axial thrust bearing (70), and the drive shaft (4) of the front fan via an inter-shaft bearing (80), and additional bearings (71, 81) are also interposed between said second intermediate casing (60) and said shafts (4, 6) .

2. A turbojet according to claim 1, **characterized by** the fact that the thrust bearing (81) of the drive shaft (4) of the front fan (3) that is supported by the second intermediate casing (60) and the inter-shaft bearing (80) is a roller bearing.

3. A turbojet according to claim 1, **characterized by** the fact that the inter-shaft bearing (80) is a thrust bearing, and the bearing (81) that is interposed between the second intermediate casing (60) and the drive shaft (4) of the front fan (3) is a roller bearing.

4. A turbojet according to either claim 2 or claim 3, **characterized by** the fact that the bearing (71) that is interposed between the second intermediate casing (60) and the drive shaft (4) of the front fan (3) is a roller bearing.

5. A turbojet according to any one of claims 1 to 4, **characterized by** the fact that the first intermediate casing (2) also supports the drive shaft (73) of the high-pressure compressor (74) via a thrust bearing (72).

6. A turbojet according to any one of claims 1 to 4, **characterized by** the fact that the front fan (3) and the rear fan (5) are counter-rotatable fans.

## Patentansprüche

1. Dreikörper-Zweistrom-Strahltriebwerk mit hoher Verdünnungsrate, das an der Vorderseite ein erstes Zwischengehäuse (2) mit einem externen Strukturgitter (30) in der Ader des Sekundärstroms (F2) und einem internen Strukturgitter (31) in der Ader des Primärstroms (F1) aufweist, einen vorderen Fan (3) und einen hinteren Fan (5), deren Blätter (10, 14) sich radial nach außen bis zu einem Fangehäuse (12) erstrecken, das außen die Ader des Sekundärstroms (F2) abgrenzt, sowie einen Niederdruckkompressor (7), der dazu bestimmt ist, die in den Kanal (8) des Primärstroms (F1) eintretende Luft zu komprimieren, wobei der vordere (3) und der hintere Fan (5) direkt und getrennt von zwei koaxialen Wellen (4, 6) in Drehung angetrieben werden,
**dadurch gekennzeichnet, daß** sich die Blätter (14) des hinteren Fans (5) in die Ader des Sekundärstroms (F2) ausgehend von einem Rad (15) erstrecken, das mit seiner Antriebswelle (6) über einen stromabwärts gelegenen Kranz (18) von beweglichen Schaufeln (19) des Niederdruckkompressors (7) verbunden ist, wobei dieser ferner wenigstens einen stromaufwärts gelegenen Kranz von beweglichen Blättern (41), der von der Antriebswelle (4) des vorderen Fans (3) angetrieben wird, und eine äußere Leitvorrichtung (49) aufweist, in deren Bohrung sich Gitter von feststehenden Schaufeln (47, 48) erstrecken, die zwischen die Kränze von beweglichen Schaufeln (41, 44, 19) geschaltet sind, wobei die äußere Leitvorrichtung von dem Fangehäuse (12) über ein zweites Zwischengehäuse (60) gehalten wird, das ein zweites externes Strukturgitter (61) in der Ader des Sekundärstroms (F2) zwischen den Blättern (10) des vorderen Fans (3) und den Blättern (14) des hinteren Fans (5) aufweist, und ein zweites internes Strukturgitter (62) in der Ader des Primärstroms (F1), und daß das erste Zwischengehäuse (2) die Drehwelle (6) des hinteren Fans über ein Axiallager (70) stützt und die Antriebswelle (4) des vorderen Fans über ein Zwischenwellenlager (80), und auch zusätzliche Lager (71,81) zwischen das zweite Zwischengehäuse (60) und die Wellen (4, 6) gelegt sind.

2. Strahltriebwerk nach Anspruch 1, **dadurch gekennzeichnet, daß** das Axiallager (81) der Antriebswelle (4) des vorderen Fans (3) von dem zweiten Zwischengehäuse (60) gestützt wird und das Zwischenwellenlager (80) ein Rollenlager ist.

3. Strahltriebwerk nach Anspruch 1, **dadurch gekennzeichnet, daß** das Zwischenwellenlager (80) ein Axiallager ist und das zwischen das zweite Zwischengehäuse (60) und die Antriebswelle (4) des vorderen Fans (3) gelegte Lager (81) ein Rollenlager ist.

4. Strahltriebwerk nach einem der Ansprüche 2 oder 3, **dadurch gekennzeichnet, daß** das zwischen das zweite Zwischengehäuse (60) und die Antriebswelle (6) des hinteren Fans (5) gelegte Lager (71) ein Rollenlager ist.

5. Strahltriebwerk nach einem der Ansprüche 1 bis 4, **dadurch gekennzeichnet, daß** das erste Zwischengehäuse (2) auch die Antriebswelle (73) des Hochdruckkompressors (74) über ein Axiallager (72) stützt.

6. Strahltriebwerk nach einem der Ansprüche 1 bis 5, **dadurch** gekenzeichnet, daß der vordere Fan (3) und der hintere Fan (5) gegenläufig sind.
